# EUROPÄISCHE PATENTANMELDUNG

(11) **EP 0 608 705 A1**
(43) Veröffentlichungstag der Anmeldung: **03.08.1994**
(21) Anmeldenummer: 94100348.5
(22) Anmeldetag: 12.01.1994
(51) Int. Cl.: B60C 11/12

(54) **Fahrzeugreifen**

(30) Priorität: 28.01.1993 DE 4302364
(71) Anmelder: Continental Aktiengesellschaft, D-30165 Hannover (DE)
(72) Erfinder: Rodewald, Helmut, Dipl.-Ing., D-31249 Hohenhameln (DE)

(57) **Zusammenfassung**

Die Erfindung bezieht sich auf einen Fahrzeugreifen mit einer Lauffläche, deren Positive in mindestens drei Spuren angeordnet sind, wobei die Positive in mindestens dreien der Spuren durch Einschnitte in Lamellen aufgeteilt sind. Um den Abrieb über der Axialerstreckung der Lauffläche zu vergleichmäßigen, wird erfindungsgemäß vorgeschlagen, daß die Einschnitte der axial äußeren Spuren (E4,E6) von geringerer Tiefe sind als die Einschnitte der inneren Spur(en) (E5).

## Beschreibung

Die Erfindung bezieht sich auf einen Fahrzeugreifen mit einer Lauffläche, deren Positive in mindestens drei Spuren angeordnet sind, wobei die Positive in mindestens dreien der Spuren durch Einschnitte in Lamellen aufgeteilt sind. Dabei spielt es keine Rolle, ob neben den Einschnitten, die zwischen 0,3 und 0,6 mm für PKW-Reifen und zwischen 0,4 und 1,0 mm für LKW-Reifen breit sein sollten weitere Rillen vorhanden sind oder nicht; allerdings wird eine Kombination der hier gelehrten Lamellengestaltung mit Längsrillen zwischen den verschiedenen Positivspuren und Querrillen in jeder Positivspur zu deren Aufteilung in Klötze bevorzugt.

Bei diesen bekannten Reifen stellt sich häufig das Problem, daß sie im Mittenbereich einen rascheren Abrieb zeigen als im Schulterbereich. Nun messen aber viele Autofahrer - zumal das bequemer ist - bei der Überprüfung ihrer Restprofiltiefe nur die Rillentiefe auf der Fahrzeugäußeren Reifenschulter, wo Ihnen eine größere Profiltiefe vorgegaukelt wird.

Aber selbst bei querrillenlosen, an sich sogar bei überhaupt rillenlosen, Reifen deutet der unterschiedliche Abrieb auf eine nicht gleichmäßige Verteilung der Kraftübertragung in der Aufstandsfläche hin. Gerade eine gleichmäßige Verteilung läßt aber einen besonders hohen Kraftschluß erwarten.

Es stellt sich somit die Aufgabe, Abrieb und Kraftschluß über der Axialerstreckung der Lauffläche zu vergleichmäßigen.

Die Aufgabe wird erfindungsgemäß dadurch gelöst, daß die Einschnitte der axial äußeren Spuren von geringerer Tiefe sind als die Einschnitte der inneren Spur(en).

Die Einschnitt-Tiefe bestimmt nämlich neben der Härte des Laufflächenmateriales die Nachgiebigkeit der Positive gegenüber tangentialen Kräften, also Antriebs- und Bremskräften einerseits und Seitenführungskräften andererseits. Es hat sich herausgestellt, daß ein im Verhältnis zum Abrieb in den axial äußeren Laufflächenbereichen zu großer Abrieb des mittleren Laufflächenbereiches auf einen zu großen Anteil des Mittenbereiches an der Längskraftübertragung zurückzuführen ist. Durch die erfindungsgemäß tieferen Einschnitte im Laufflächenmittenbereich wird dieser Bereich gegenüber Längskräften weicher und übernimmt dadurch einen kleineren Anteil an Längskräften. Die axial äußeren Laufflächenbereiche übernehmen dementsprechend einen größeren Anteil an Längskräften.

Durch diese Umverteilung der Längskraftübertragung wird bei etwa konstant bleibendem Gesamtabriebvolumen pro Zeit die Abriebgeschwindigkeit in Laufflächenmitte gesenkt und die in den Randbereichen erhöht. Für jeden individuellen Reifentyp kann der Fachmann durch einen einfachen Abriebversuch diesen Effekt genauso stark dosieren, daß die Abriebgeschwindigkeit in allen axialen Bereichen des Reifens gleich ist, womit die größtmögliche Lebensdauer des Reifens erreicht wird. Verbleibt nach einem ersten Versuch mit etwas tieferen Einschnitten in der Mitte als in den Randbereichen noch ein höherer Mittenals Randabrieb, dann werden im zweiten Versuch die Mitteleinschnitte weiter vertieft oder, wenn die Tiefe der Mitteleinschnitte bereits die maximale Tiefe der Profilrillen erreicht hat, wird die Tiefe der axial weiter außen liegenden Einschnitte verringert. Entsprechend umgekehrt ist zu verfahren, wenn als Versuchsergebnis eine Überkompensation des zu bekämpfenden überhöhten Mittenabriebes festgestellt wird.

Für solche Reifen, die mindestens fünf Spuren von Positiven aufweisen, empfiehlt es sich, daß auf jeder axialen Seite des Reifens zwischen der axial äußersten Spur einerseits und der innersten Spur bei ungerader Spuranzahl oder den innersten Spuren bei gerader Spuranzahl andererseits zumindest je eine, gegebenenfalls mehrere, Zwischenspur bzw. -spuren von Positiven angeordnet sind, deren Einschnitttiefe zwischen der Tiefe der Einschnitte der axial äußeren Spur und und der Tiefe der Einschnitte der inneren Spur(en) liegt. Der Tiefenverlauf der Einschnitte über der Axialen wird dabei verstetigt. Es versteht sich, daß vorteilhafterweise auch innerhalb eines jeden im wesentlichen axial verlaufenden Einschnittes die Einschnitttiefe zur Reifenmitte hin zunimmt.

Insbesondere bei solchen Reifen, wo der Mittenabrieb besonders stark ausgeprägt ist und/oder wo die Laufflächenränder aus einer weicheren Kautschukmischung erstellt sind als als der Mittenbereich, empfiehlt es sich, die Lamellentiefe im Randbereich bis auf Null zu senken, sodaß also die axial äußeren Spuren von Positiven überhaupt keine Einschnitte aufweisen.

Die Erfindung wird nachfolgend anhand zweier Figuren näher erläutert. Es zeigt
- Fig. 1: Eine Draufsicht auf ein erfindugsgemäß durch Einschnitte in Lamellen aufgelöstes Reifenprofil und
- Fig. 2: einen dem in Fig. 1 angegebenen Verlauf folgenden Querschnitt durch das gleiche Profil.

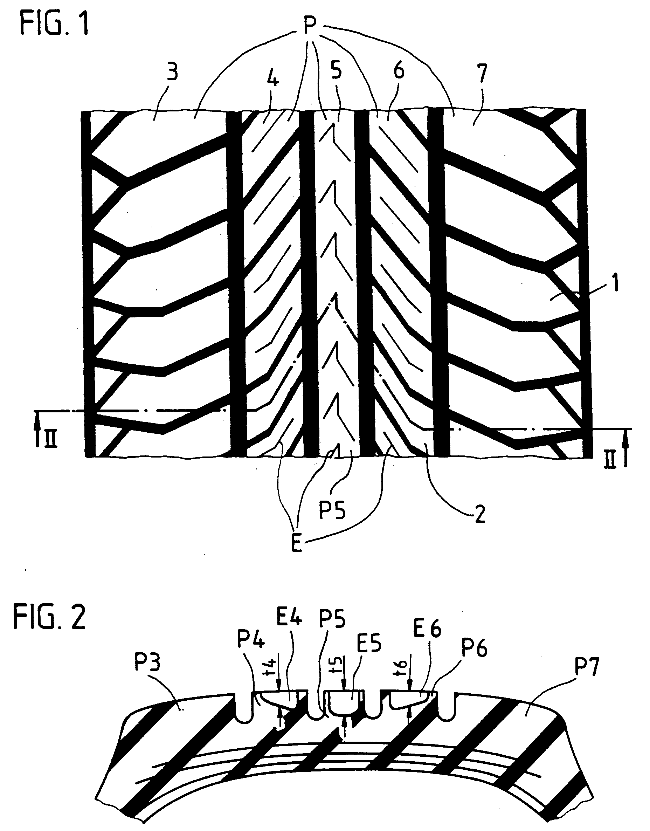

Figur 1 zeigt in Draufsicht einen Ausschnitt aus einem Fahrzeugreifen 1 mit einer Lauffläche 2, deren Positive zusammenfassend mit P bezeichnet werden. Die Positive P sind in 5 Spuren 3, 4, 5, 6, 7 gegliedert. Insoweit nur Positive einer bestimmten Spur angesprochen werden sollen, wird hinter "P" noch das Bezugszeichen der betreffenden Spur ergänzt. Die mittlere Spur 5 ist ohne Querrillen ausgeführt, also nicht in Klötze aufgegliedert.

Den Verzicht auf Querrillen kann man sich unter dem Gesichtspunkt des Aquaplanings in Laufflächenmitte am ehesten erlauben, insbesondere dann, wenn diese Mittelspur 5 so schmal ausgeführt ist wie in diesem Beispiel. Man erreicht hiermit den Vorteil, daß der Laufflächenbereich, der am weichesten gegenüber der Felge festgelegt ist, die geringstmögliche Schwingungserregung erfährt, nämlich nur noch die durch die Fahrbahnrauhigkeit bzw. -unebenheit.

Solche Profile, die einen sehr günstigen Kompromiß zwischen den widersprechenden Forderungen nach geringer Geräuschemission und hoher Aquaplaning-Grenzgeschwindigkeit erlauben, zeigen unlamelliert häufig eine höhere Abriebgeschwindigkeit in Laufflächenmitte als an den Laufflächenrändern. Ein - wie hier in der Mitte gezeigtes - durchgehendes Positivband P5 zeigt die größtmögliche Längssteifigkeit, neigt deshalb zur Übernahme eines übergroßen Anteiles an der Längskraftübertragung und damit am Abrieb.

Figur 2 zeigt die Anwendung der erfindungsgemäßen Lehre auf das anhand von Figur 1 erläuterte Problem: Während die axial äußeren Klötze P3, P7 überhaupt keine Einschnitte aufweisen und während die Klötze P4, P6 durch Einschnitte E4, E6 einer Tiefe t4, t6 von etwa 4 mm aufgeweicht sind, ist das mittlere, ungeteilt umlaufende Positivband P5 durch Einschnitte einer Tiefe t5 von 7 mm aufgeweicht bei einer Profiltiefe von 8 mm.

Damit die Laufruhe des mittleren Positives P5 durch die Einschnitte möglichst wenig gestört wird, sind alle Einschnitte E5 als Sackeinschnitte ausgeführt, das heißt, daß sie in keine Rille münden. Nicht zuletzt aus Gründen der stilistischen Konsequenz sind die Einschnitte E4 und E6 entsprechend gestaltet.

Die Erfindung ist nicht auf die gezeigte Gestaltung beschränkt; vielmehr soll es nur darauf ankommen, daß die Einschnitte der axial äußeren Spuren von geringerer Tiefe sind als die Einschnitte der inneren Spur(en). Hierdurch wird für alle Reifenprofilierungen, auch solche, die im Mittenbereich weniger oder gar keine Querrillen aufweisen, ein über der axialen Erstreckung gleichmäßiger Abrieb ermöglicht und dadurch die längstmögliche Lebensdauer erreicht.

## Patentansprüche

1. Fahrzeugreifen (1) mit einer Lauffläche (2), deren Positive (P) in mindestens drei Spuren (3, 4, 5, 6, 7) angeordnet sind, wobei die Positive (P) in mindestens dreien (3, 4, 6, 7) der Spuren (3, 4, 5, 6, 7) durch Einschnitte (E) in Lamellen aufgeteilt sind,
**dadurch gekennzeichnet,** daß die Einschnitte (E3, E7) der axial äußeren Spuren (3, 7) von geringerer Tiefe (t) sind als die Einschnitte (E4, E5, E6) der inneren Spur oder Spuren (4, 5, 6).

2. Fahrzeugreifen (1) nach Anspruch 1 mit mindestens fünf Spuren (3, 4, 5, 6, 7) von Positiven (P) dadurch gekennzeichnet, daß auf jeder axialen Seite des Reifens (1) zwischen der axial äußersten Spur (3 bzw. 7) und der oder den innersten Spur oder Spuren (5) je eine Zwischenspur (4 bzw. 6) von Positiven angeordnet ist, deren Einschnitttiefe (t4 bzw. t6), zwischen der Tiefe (t3 bzw. t7) der Einschnitte (E3 bzw. E7) der axial äußeren Spur (3 bzw. 7) und der Tiefe (t5) der Einschnitte der inneren Spur bzw. Spuren (5) liegt.

3. Fahrzeugreifen (1) nach einem der vorangehenden Ansprüche dadurch gekennzeichnet, daß die axial äußeren Spuren (5) von Positiven (P) überhaupt keine Einschnitte aufweisen.
